Europäisches Patentamt

European Patent Office

Office européen des brevets

(19)

(11) Publication number: 0 479 683 B1

# EUROPEAN PATENT SPECIFICATION

(12)

(45) Date of publication of patent specification: 22.03.95    (51) Int. Cl.6: **B24B 9/14**

(21) Application number: 91402656.2

(22) Date of filing: 04.10.91

(54) Lens grinding apparatus.

(30) Priority: **05.10.90 JP 268115/90**
**05.10.90 JP 268116/90**
**05.10.90 JP 268117/90**

(43) Date of publication of application:
**08.04.92 Bulletin 92/15**

(45) Publication of the grant of the patent:
**22.03.95 Bulletin 95/12**

(84) Designated Contracting States:
**DE FR GB IT NL**

(56) References cited:
**EP-A- 0 379 427**

**PATENT ABSTRACTS OF JAPAN vol. 11, no. 135 (M-585)(2582), 28 April 1987; & JP - A - 61274859 (TOKYO OPTICAL CO) 05.12.1986**

(73) Proprietor: **Kabushiki Kaisha TOPCON**
**75-1, Hasunuma-cho**
**Itabashi-ku**
**Tokyo (JP)**

(72) Inventor: **Watanabe, Takahiro, c/o K.K. Topcon**
**75-1, Hasunuma-cho,**
**Itabashi-ku**
**Tokyo (JP)**
Inventor: **Suzuki, Yasuo, c/o K.K. Topcon**
**75-1, Hasunuma-cho,**
**Itabashi-ku**
**Tokyo (JP)**

(74) Representative: **Lhoste, Catherine et al**
**SOCIETE DE PROTECTION DES INVENTIONS**
**25, rue de Ponthieu**
**F-75008 Paris (FR)**

EP 0 479 683 B1

## Description

This invention concerns a lens grinding apparatus for grinding an uncut lens to a shape that fits the lens frame of a spectacle frame. Description of the Prior Art

In general, spectacle frames are provided with a V-shaped groove on their entire inner surface for the purpose of fitting a lens. Lenses which are to be fitted in spectacle frames must therefore necessarily have a roof-shaped projection or bevel on their outer circumference so that they will fit this groove.

Depending on the position in which the groove is cut, however, there is a possibility that too much of the lens will protrude from the frame and make the frame less attractive.

When using a conventional grinding apparatus, therefore, a suitable bevel position must be found in the direction of the lens thickness depending on the shape of the lens frame of the spectacle frame and the shape of the pre-edged lens. For this purpose, a bevel-ground configuration is displayed before grinding the lens, and the position in which the bevel should be ground is set while observing this configuration.

When both left and right lenses are ground by this apparatus, however, after grinding the bevel on one lens, it is necessary to reset the bevel position before grinding the other lens due to dissimilarity of shape between the left and right lens.

In addition, a good balance has to be maintained between the left and right lens. Namely, when grinding both left and right lenses with a lens grinding apparatus, a good balance of bevel position (or good balance of lens prtruding amount from lens frame, e.t.c) has to be found between them, and it is therefore necessary to decide the setting for the bevel position on the left lens based on the appearance of the bevel projection on a right lens which has already been ground. Therefore, the operator has to set the bevel position on the left lens while observing the shape of a right lens which had already been ground, or alternatively, the operator has to memorize a setting determined by the right lens in order to set the position of the bevel on the left lens.

Conseqently, the setting of the bevel position is thus very troublesome, and it also involves a risk that the bevel position of the left lens could be incorrect.

In case of left lens refraction correspond to the right lens refraction, it is better that unnecessary to reset the bevel position after having ground one lens according to one set of conditions before grinding the other lens.

Further, depending on the spectacle frame and the shapes of the left and right lenses (assuming the vision of the left and right eyes is very different), it may be better to reset the conditions for deciding a new bevel position corresponding to a new lens shape and edge thickness.

## SUMMARY OF THE INVENTION

It is therefore an object of the invention to provide a lens grinding apparatus which makes it unnecessary to reset the bevel position after having ground one lens according to one set of conditions before grinding the other lens.

To achieve the aforesaid object, this invention provides a lens edging machine for grinding a lens based on configurational data obtained by measuring the shape of a pre-edged lens characterized in that it comprises:

a bevel setting means for setting the positions of the bevel edges of said lens before grinding,

a display means for displaying bevel shape information in the form of an image before grinding the lens based on configurational data for the lens,

a memory means for storing a bevel position set for either the left or right lens as a first bevel position,

and a control means which sets a bevel position for another lens based on the first bevel position stored by said memory means, causes it to be stored as a second bevel position by said memory means, and causes first and second information obtained from the first and second bevel positions to be displayed by said display means so as to select either the first or second bevel information.

It is a further object of the invention to provide a lens edging machine which allows the bevel of a lens to be ground to be observed while observing the bevel of a lens that has already been ground on the same display means, and to set the bevel information (or condition) similarly by comparing the bevelled appearance of the left and right lenses.

It is yet a further object of the invention to provide a lens edging machine which makes it easier to reset the bevel position before grinding a second lens after setting the bevel position for a first lens and grinding it.

These and other objects, features and advantages of the present invention will be well appreciated upon reading of the following description of the invention when taken in conjunction with the attached drawings

2

EP 0 479 683 B1

with understanding that some modifications, variations and changes of the same could be made by a person skilled in the art to which the invention pertains without departing from the spirit of the invention or the scope of claims appended hereto.

BRIEF DESCRIPTION OF THE ATTACHED DRAWINGS

Fig. 1 is a block diagram showing the arrangement of the lens grinding apparatus of the present invention.

Fig. 2 (A), (B), (C) and (D) are flowcharts showing the action of the lens grinding apparatus of the present invention.

Fig. 3 is a model representation for the purpose of illustrating the principle of the present invention.

Fig. 4 is a plan view showing an embodiment of an inputting apparatus and a display device.

Fig. 5 is a schematic view illustrating another embodiment of the display device.

Fig. 6 is a schematic view illustrating the radius vector of a lens.

Fig. 7 is a model representation showing the relation between the lens housed in the lens frame and the bevel apex distance of the lens.

Figs. 8 - 11 is a schematic view illustrating the data and diagram displayed by the display unit of Fig. 4.

DESCRIPTION OF THE PREFERRED EMBODIMENT

The present invention will now be described in further detail with reference to the embodiment.

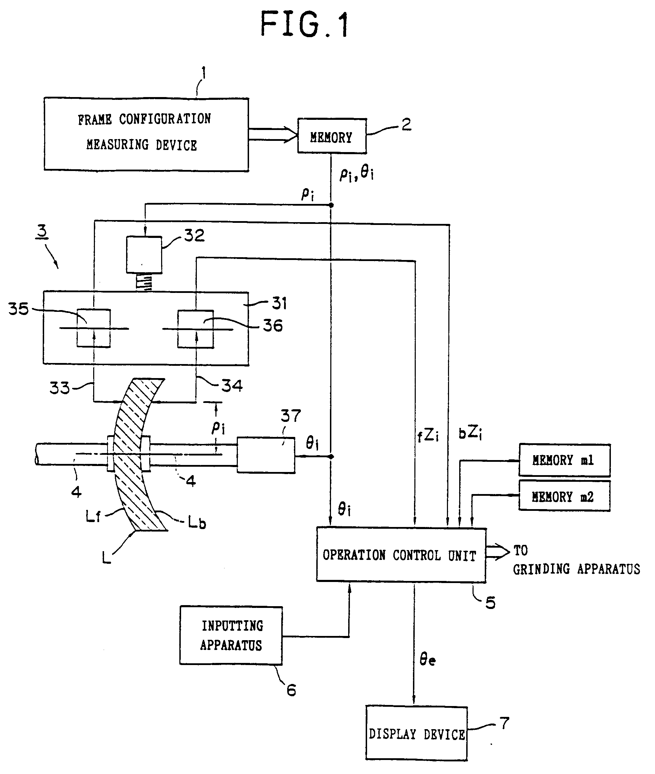

Fig. 1 is a block drawing illustrating, in particular, the bevel display system of the lens grinding apparatus of the present invention.

In Fig. 1, 1 is a frame configuration measuring device, 2 is a memory and 3 is a measuring device for measuring a two-dimensional position of a lens refracting surface.

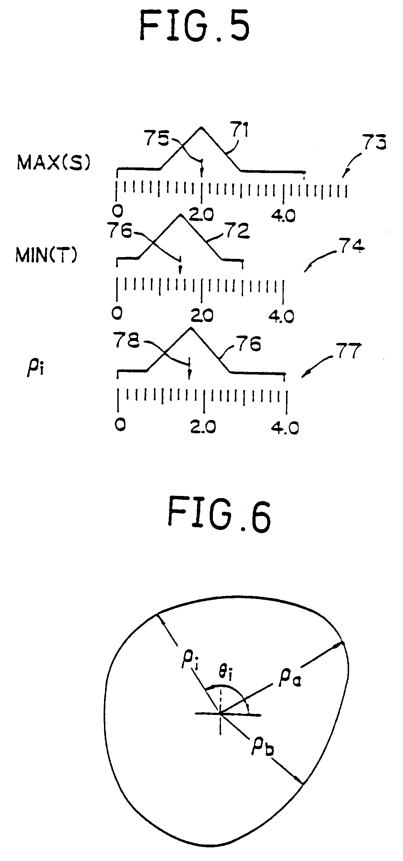

The frame configuration measuring device 1 measures the shape of a lens frame LF of a spectacle frame, or more precisely the locus of its bevel-ground groove, in the form of radius vector parameters ($\rho_i$, $\theta_i$) [i = 1, 2, 3....N] as shown in Fig. 6. The detailed arrangement and action of this frame configuration measuring device 1 are the same as has been disclosed in Japanese Unexamined Published Patents Sho 60-115079 and Sho 60-287491. The radius vector information or the radius vector parameters ($\rho_i$, $\theta_i$) measured by this frame configuration measuring device 1 are stored by a memory 2.

The measuring device 3 comprises a pulse motor 32, a support 31 which is caused to approach and recede from a lens L by the driving action of this pulse motor 32, feelers 33 and 34 which are brought into contact with the front refracting surface and the rear refracting surface of a lens L positioned on the support 31, and encoders 35, 36 mounted on the support 31 which are able to detect the amount of movement of the feelers 33, 34.

The lens L is gripped between lens rotating shafts 4, 4 on a carriage, not shown, these lens rotating shafts 4, 4 being arranged such that they can be rotated by a pulse motor 37. The lens L can therefore be rotated together with the lens rotating shafts 4, 4 by the pulse motor 37. The radius vector angle $\theta_i$ is input to the pulse motor 37 from the memory 2. This pulse motor 37 controls the rotation of the lens rotating shafts 4, 4 based on this input, and rotates the shafts 4, 4 together with the lens L by the radius vector angle $\theta_i$.

At the same time, the radius vector length $\rho_i$ is input to the pulse motor 32 of the measuring device 3 from the memory 2. This pulse motor 32 drives the support 31 based on this input such that the feelers 33, 34 are positioned at the radius vector length $\rho_i$.

Detection amounts fZi, bZi of the encoders 35, 36 are input to a operation control circuit 5 for the purpose of performing computations described hereinafter.

An inputting apparatus 6 and display device 7 are connected to the operation control circuit 5. The inputting apparatus 6 and display device 7 are mounted together on a control panel 8. The display device 7 may be for example a graphic display device based on liquid crystals.

Lens configuration data found from this operation control circuit 5 is input into either the memory 1 or the memory 2, and stored.

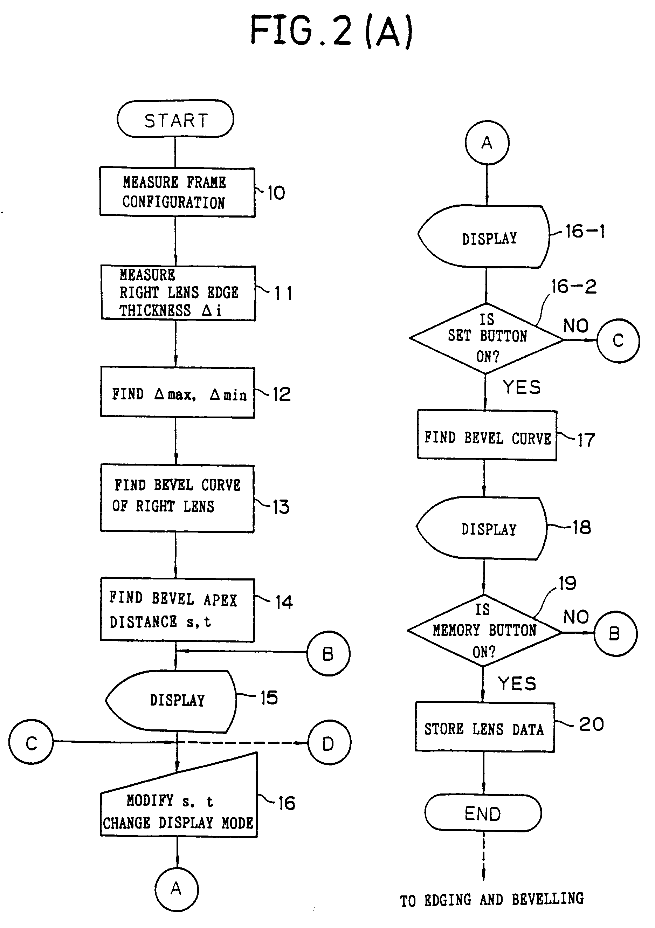

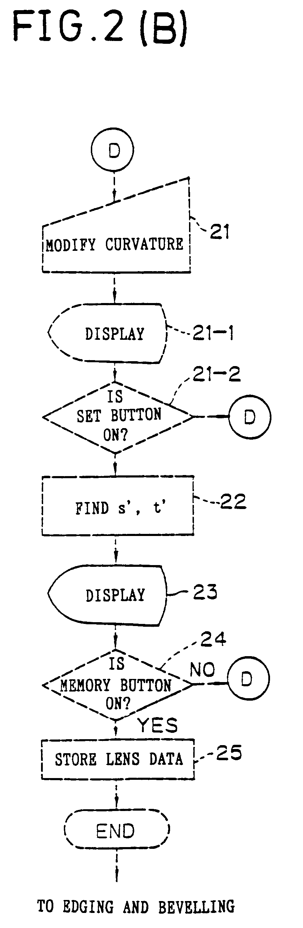

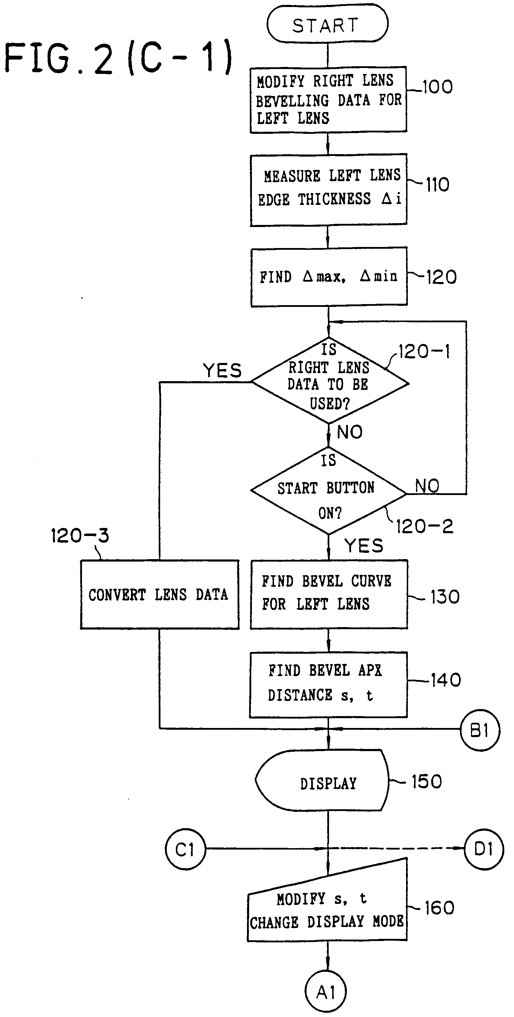

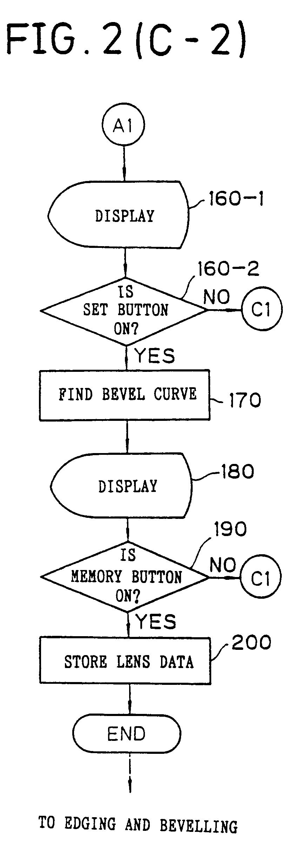

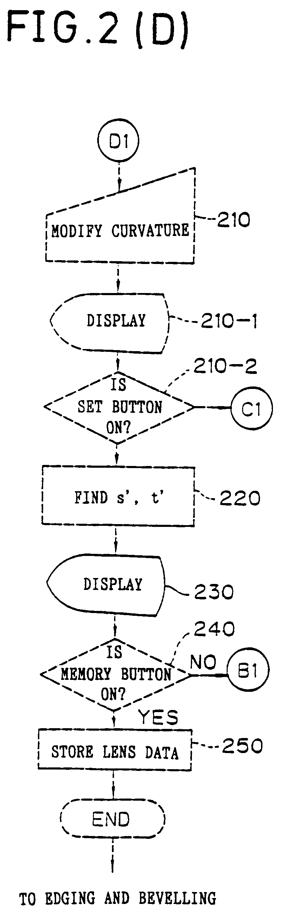

The action of the aforesaid apparatus will now be described with reference to the flowcharts of Fig. 2 (A), (B), (C) and (D).

Fig. 2(A), (B) illustrate the data processing carried out for the right lens, while Fig. 2(C), (D) illustrate the data processing carried out for the left lens.

3

[1] Data Processing for Right Lens

Step 10
(Measurement of Frame Configuration)

The shape of the right lens frame LF of the spectacle frame is measured by the frame configuration measuring device 1. Then, radius vector parameters ($\rho_i$, $\theta_i$) for a bevel locus centered on a position specified by the geometrical center of the lens frame (FPD), the inter-pupil distance of the spectacle user (PD), and the amount of displacement (UP) of the pupil center of the eye with respect to the geometrical center of the frame in the up or down direction, are stored by the memory 2. If the left and right lens frames of this spectacle frame have the same shape and size, the radius vector parameters ($\rho_i$, $\theta_i$) for the bevel locus of the right lens frame LF are used for the data processing carried out for the left lens frame.

Step 11
(Measurement of Uncut Right Lens, and Computation of Edge Thickness)

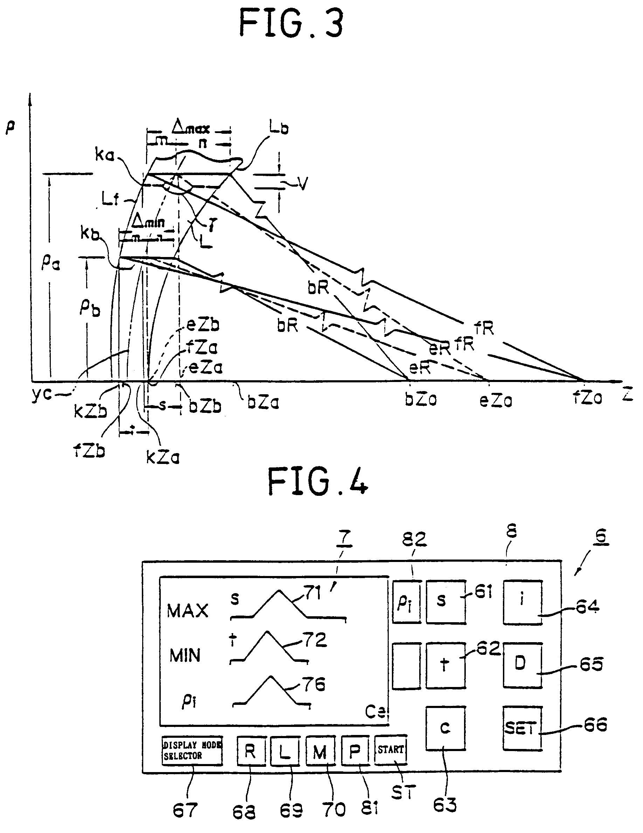

The feelers 33, 34 are brought into contact with the front and rear refracting surfaces Lf and Lb respectively of an uncut lens L as shown in Fig. 1, and a right eye selector button 68 of the inputting apparatus 6 shown in Fig. 4 is pressed.

The start button S is then pressed to start a position measurement corresponding to the radius vector length $\rho_i$ of the front refracting surface Lf and rear refracting surface Lb of the right eye lens.

Namely, when the start button is pressed, causes a specific number of pulses corresponding to the radius vector length $\rho_i$ to be input to the pulse motor 32 from the memory 2. This pulse motor 32 then drives the support 31, and the feelers 33, 34 are moved to the position of the radius vector length $\rho_i$.

At the same time, a specific number of pulses corresponding to the radius vector angle $\theta_i$ is input to the pulse motor 37 from the memory 2. This pulse motor 37 then rotates the lens rotating shafts 4, 4 and the lens L by $\theta_i$.

The amounts of movement of the feelers 33, 34 in the Z direction at this time are detected by the encoders 35, 36, and the values fZi, bZi detected by the encoders are input to the operation control circuit 5.

This operation control circuit 5 calculates the edge thickness $\Delta i = fZi - bZi$.

Step 12
(Selection of Maximum and Minimum Edge Thickness)

The operation control circuit 5 selects a radius vector ($\rho_a$, $\theta_a$) corresponding to a maximum edge thickness $\Delta_{max}$ ($= fZa - bZa$) and a radius vector ($\rho_b$, $\theta_b$) corresponding a minimum edge thickness $\Delta_{min}$ ($= fZb - bZb$).

In these expressions, fZa is the position in the Z direction of a point on the front refracting surface Lf at the radius vector $\rho_a$, bZa is the position in the Z direction of a point on the rear refracting surface Lb at the radius vector $\rho_a$, fZb is the position in the Z direction of a point on the front refracting surface Lf at the radius vector $\rho_b$, and bZb is the position in the Z direction of a point on the rear refracting surface Lb at the radius vector $\rho_b$.

Step 13
(Computation of Bevel Apex Position and Bevel Curvature)

When cutting a bevel (V-shaped projection) on the edge of a lens using a bevel-ground groove (V-shaped groove) of a bevelling wheel, the size and the shape of the bevel groove are already known.

To cut a bevel on the edge of a lens having an edge thickness of $\Delta i$ using such a bevelling wheel, the ratio of the distance from the front edge to the bevel apex and the distance from the bevel apex to the rear edge, is first set at m:n.

If the bevel apex position for a maximum edge thickness $\Delta_{max}$ is eZa, and the bevel apex position for a minimum edge thickness $\Delta_{min}$ is eZb, the bevel apex positions eZa, eZb may be found from the relations:

EP 0 479 683 B1

$$e\,Za = f\,Za + \frac{m}{m+n}\,\Delta_{max} \quad \cdots\cdots\cdots\cdots (1)$$

$$e\,Zb = f\,Zb + \frac{m}{m+n}\,\Delta_{min} \quad \cdots\cdots\cdots\cdots (2)$$

Next, the equations:

$$eR^2 = \rho_a{}^2 + (eZ_\theta - eZa)^2 \quad (3)$$

$$eR^2 = \rho_b{}^2 + (eZ_\theta - eZb)^2 \quad (4)$$

are solved, and the radii of curvature $eZ_\theta$, $eR$ are found for a bevel curved surface yc.

As the left-hand sides of equations (3) and (4) are the same, we may write:

$$\rho_a{}^2 + (eZ_\theta - eZa)^2 = \rho_b{}^2 + (eZ_\theta - eZb)^2$$

Solving this equation for $eZ_\theta$:

$$2\,e\,Z_\theta(e\,Za - e\,Zb) = \rho_a{}^2 - \rho_b{}^2 + e\,Za^2 - e\,Zb^2$$

$$\therefore e\,Z_\theta = \frac{(\rho_a{}^2 - \rho_b{}^2) + (e\,Za^2 - e\,Zb^2)}{2\,(e\,Za - e\,Zb)} \quad \cdots\cdots (5)$$

Further, the curvature Ce of the bevel curved surface yc is:

$$C_e = \frac{n-1}{e\,R} \times 100 \quad \cdots\cdots\cdots\cdots\cdots\cdots\cdots\cdots\cdots\cdots\cdots\cdots (6)$$

where n is the refractive index of the lens L.

Calculations (1)~(6) are performed by the operation control circuit 5.

Step 14

The operation control circuit 5 computes the radius of curvature fR of the front refracting surface Lf of the lens from:

$$fR^2 = \rho_a{}^2 + (fZ_\theta - fZa)^2 \quad (7)$$

$$fR^2 = \rho_b{}^2 + (fZ_\theta - fZb)^2 \quad (8)$$

As the angle and depth V of the V groove of the bevelling wheel of the lens grinding apparatus are already known, the positions kZa of an edge ka and kZb of an edge kb of the front refracting surface Lf can be found from the radius of curvature fR of this surface Lf and the radius of curvature eR of the bevel surface. The bevel apex distances of the maximum thickness edge i.e. s, and from the minimum thickness edge i.e. t can then be found from:

$$s = eZa - kZa \quad (9)$$

$$t = eZb - kZb \quad (10)$$

Similarly, if the edge of the front refracting surface at an arbitrary radius vector $\rho_i$ is ki, the position on of points ki is kZi, the bevel apex position at the arbitrary radius vector $\rho_i$ is eZi, and the bevel apex distance from this edge ki to the bevel apex position eZi is U, the radius of curvature eR for each radius

5

vector $\rho_i$ can be found from:

$$eR^2 = \rho_i{}^2 + (eZ_\theta - eZi)^2 \qquad (11)$$

Rewriting this equation as:

$\sqrt{eR^2 - \rho_i{}^2} = eZ_\theta - eZi$ and substituting the terms on the left and right hand sides, the bevel apex position eZi is then obtained from:

$$eZi = eZ_\theta - \sqrt{eR^2 - \rho_i{}^2} \qquad (12)$$

Alternatively, the curvature Ce of the bevel surface yc may be determined as described hereintofore, and the bevel apex position for an arbitrary radius vector $\rho_i$ computed based on this Ce.

Step 15

The display device 7 displays in digital form the curvature Ce, the bevel apex distances s, t as bevel positions which are one type of bevel data found in the foregoing steps, and lens bevel section configurations 71, 72, 76 as bevel shapes which are another type of bevel data as shown in Fig. 4.

(1) Modification of bevel distances s, t

Step 16

In this step, the display or data displayed on the screen of the display device 7 is modified by pressing a display mode selector button 67 (Fig. 4), a $[\rho_i]$ button 82 for shifting the indicator line H showing the radius vector $\rho_i$, a [t] button 62 for modifying the bevel apex distance, an [I] button 64 and a [D] button 65.

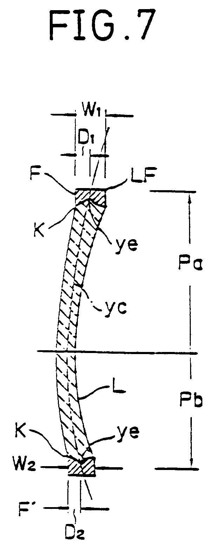

The operator measures the bevel apex distance s and the maximum frame thickness $W_1$ (Fig. 7) of the lens frame of the spectacle frame which are displayed digitally by the display device 7, and half of this frame thickness $W_1$, i.e. $W_1/2$, is computed. This value $W_1/2$ is taken as the maximum distance from the front surface of the lens frame to the bottom of the bevel groove (V-shaped groove of the lens frame) at the position of the maximum thickness $W_1$ of the lens frame (maximum V-shaped groove apex distance of the lens frame).

The bottom of the bevel groove of the lens frame (V-shaped groove) is arranged in the center of the direction of thickness of the lens frame. The maximum bevel distance of the lens frame may thus be found by computation from this $W_1$ after determining the frame thickness W1, or it may be found as $D_1$ from a previous measurement. In practice, the maximum bevel distance $D_1$ of the frame is found by a previous measurement.

Similarly, the operator measures the bevel apex distance t and the minimum frame thickness $W_2$ (Fig. 7) of the lens frame of the spectacle frame which are displayed digitally by the display device 7, and half of this frame thickness $W_2$, i.e. $W_2/2$, is computed. This value $W_2/2$ is taken as the minimum distance from the front surface of the lens frame to the bottom of the bevel groove (V-shaped groove of the lens frame) at the position of the minimum thickness $W_2$ of the lens frame (minimum V-shaped groove apex distance of the lens frame). Here too, the minimum bevel distance of the lens frame may previously be measured as $D_2$ as in the case of the maximum bevel distance of the frame, and in practice it is found by a previous measurement.

The maximum bevel distance of the frame $D_1$ found in this step and the maximum bevel distance s of the lens found in the immediately preceding step are then compared. If the two are different, an [S] button 61 of the inputting apparatus shown in Fig. 4 is switched to ON. Then, if it is desired to increase the display value s the [I] button 64 is pressed, while if it is desired to decrease the display value s the [D] button 65 is pressed.

Similarly, the minimum bevel distance of the frame $D_2$ found in this step and the minimum bevel distance t of the lens found in the immediately preceding step are compared.

If it is necessary to make a modification, the [t] button 62 is switched to ON and the same procedure is carried out.

Increases and decreases (shift amounts) of these display values s, t are displayed as numerical figures in the form [±0.---] after the [position] displayed by the displayed unit of the display device.

In other words, the shift amounts indicated by these figures indicate how far the actual bevel apex grinding position should be displaced when the bevel apex position found by computation from the

EP 0 479 683 B1

thickness dividing ratio m:n, i.e. the bevel apex position when the bevel apex is placed at distances s, t from the front refracting surface of the lens, is [0].

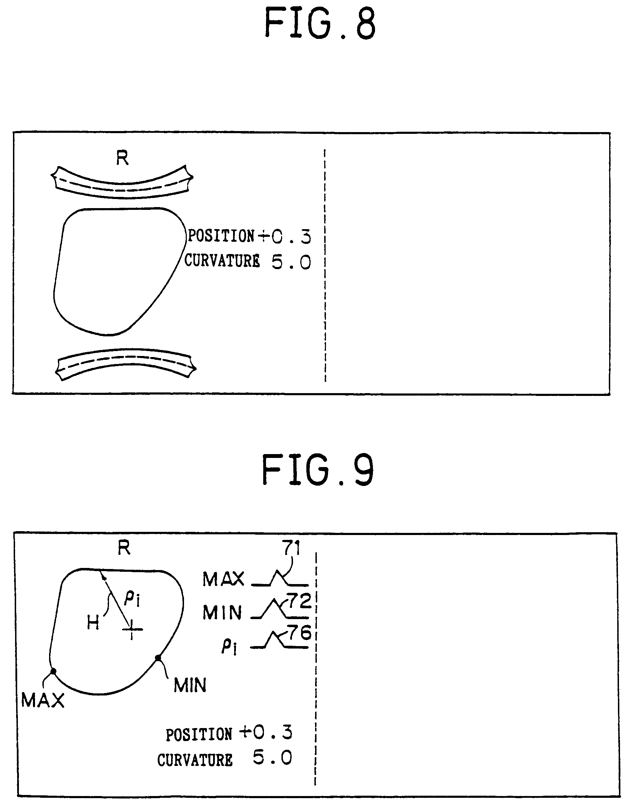

Further, if it desired to modify the position of the arbitrary radius vector $\rho_i$ so as to modify the bevel section configuration, the display mode selector button 67 is pressed to give the display shown in Fig. 9, the [$\rho_i$] button 82 is pressed, and then either the [I] button 61 or the [D] button 64 are pressed.

If the [I] button 61 is pressed after pressing the [$\rho_i$] button 82, the indicator line H which shows the radius vector [$\rho_i$] rotates in a clockwise direction. Likewise, if the [D] button 64 is pressed after pressing the [$\rho_i$] button 82, the indicator line H which shows the radius vector [$\rho_i$] rotates in an anticlockwise direction. The display of the bevel section configuration 76 corresponding to $\rho_i$ displayed by the display device 7, is therefore modified to a different shape positioned at the new radius vector $\rho_i$.

Step 16-1

In this step, the display values s, t modified in the step 16, the position of the indicator line H, and the bevel configuration 76 are displayed.

Futher, as shown in Fig.8, the display mode selector button 67 is pressed in the step 16, therefore, the lens edge shape, lens curved shape and curvature (curvature = 5.0 in the figure), and the shift amount from the bevel apex position set by m:n (position = +0.3 in the figure) are also displayed.

Altanatively, as shown in Fig.9, when the display mode selector button 67 is pressed in the step 16, the lens configuration and bevel information may be displayed. The lens configuration includes the lens profiles $P_1$, $P_2$ and the lens edge shape q. The bevel condition or the bevel information include the curvature (curvature = 5.0 in the figure), the shift amount from the bevel apex position set by m:n (position = +0.3 in the figure), bevel position condition or bevel position information such as the position of the maximum and minimum edge thicknesses, and the lens bevel section configurations 71, 72, 76.

The bevel apex positions found in the step 14, i.e. the "bevel apex positions found by setting m:n and by calculation", are not altered immediately after proceeding from the step 14 to the step 15. The shift amount of the bevel apex position immediately after proceeding from the step 14 to the step 15 is therefore "0", and the display "position +0.3" in Figs. 8 and 9 will be "position = 0".

The program then prceeds to a step 16-2.

Step 16-2

In this step 16-2, it is determined whether or not the "SET" button 66 is depressed. If it is not depressed, i.e. the answer to this question is negative (NO), the program returns to the step 16, and "Modification of the display values s, t, the indicator line H and the bevel configuration 76", can then be continued.

If the "SET" button is depressed, i.e. the answer to this question is affirmative (YES), the program proceeds to a step 17.

Step 17

From the modified bevel apex positions eZa', eZb', the operation control unit 5 calculates:

$$eR^{2'} = \rho_a^2 + (eZ_\theta - eZa')^2 \qquad (3)'$$

$$eR^{2'} = \rho_b^2 + (eZ_\theta - eZb')^2 \qquad (4)'$$

in the same way as Equation (2), finds a new radius of curvature eR for the bevel curved surface, finds a new bevel curvature Ce'' from:

$$Ce' = \frac{n-1}{eR'} \times 100 \quad \cdots \cdots \cdots \cdots \cdots \cdots (6)'$$

in the same way as from equation (3), and the program then proceeds to a step 18.

7

Step 18

In this step, the curvature calculated in the step 17 is displayed by the display device, and the program proceeds to a step 19.

Step 19

In this step 19, it is determined whether or not the memory button 70 is depressed to "ON". If it is not "ON", the program returns to the step 16, and "Modification of the display values s, t, the indicator line H and the bevel configuration 76", can then be continued.

If it is "ON", the program proceeds to a step 20.

Step 20

In this step, parameters such as the lens data and lens configuration data obtained in the step 10 or the step 19 are stored by the memory m1, and processing of the right lens bevel information display is terminated.

"Modification of bevel distances s, t by curvature"

Instead of directly modifying the bevel distances as described hereintofore, the curvature Ce may be modified as described in steps 21 - 23 hereinafter.

Step 21

A "C" button 63 of the inputting apparatus 6 is switched "ON", and the "I" button 64 or the "D" button 65 is operated so as to modify the curvature Ce.

Step 21-1

In this step, the modified values input in the step 21 are displayed by the display device 7, and the program proceeds to a step 21-2.

Step 21-2

In this step, it is determined whether or not the "SET" button 66 is depressed, If the "SET" button 66 is not depressed, i.e. if the answer to this question is negative (NO), the program loops back to the step 21 and modification of input values can be continues. Further, if the "SET" button is depressed, the program proceeds to a step 22.

Step 22

The operation control unit 5 finds a bevel radius of curvature eR'' from the curvature Ce' after modification using the relation:

$$e R' = \frac{n-1}{C e'} \times 100 \quad \cdots\cdots\cdots\cdots\cdots (6)'$$

new bevel apex positions eZa, eZb'', are found from the relation (2) by solving:

$$eR^{2'} = \rho_a{}^2 + (eZ_\theta - eZa')^2 \quad (3)'$$

$$eR^{2'} = \rho_b{}^2 + (eZ_\theta - eZb')^2 \quad (4)'$$

and new bevel distances s', t' are found from:

$$s' = eZa' - kZa \quad (9)'$$

8

$$t' = eZb' - kZb \qquad (10)'$$

Step 23

These new s', t' are displayed by the display unit 7, and the program proceeds to a step 24.

The lens bevel distances s', t' thus modified may satisfy the frame bevel distances $D_1$, $D_2$, otherwise the curvature Ce is modified until they reach values very close to them.

Further, instead of displaying the lens bevel positions s', t' in digital form, the scales 73, 74, 77 and indices 75, 76, 78 may be displayed in image form as shown in Fig. 5. Further, we have displayed only the cases for the edge thicknesses $\Delta_{max}$, $\Delta_{min}$ but edge thicknesses for any indicator lines can be displayed.

Step 24

In this step, it is determined whether or not the memory button 70 is depressed. If it is not, i.e. if the answer to this question is negateve (NO), the program loops back to the step 21, and data modification input can be continues.

If it is not depressed, the program proceeds to a step 25.

Step 25

In this step, the lens bevel distances s', t' modified as described hereintofore are stored in the memory 1.

[11] Left lens bevel data processing

Step 100

In this step, if the left and right lens frames of the spectacle frame have the same shape, the radius vector ($\rho_i$, $\theta_i$) of the bevel locus which was found in the step 1 of [1] and stored in the memory 1, is used. In the data processing for the left lens, therefore, the measurement of radius vector parameters ($\rho_i$, $\theta_i$) for the bevel locus is omitted, these parameters ($\rho_i$, $\theta_i$) are transposed for the left lens and the program proceeds to a step 110.

Step 110
(Measurement of Uncut Lens, and Computation of Edge Thickness)

The feelers 33, 34 are brought into contact with the front and rear refracting surfaces respectively of an uncut lens as shown in Fig. 1, and after pressing the left eye selector button L, the start button ST is pressed to start a position measurement corresponding to the radius vector length 1 of the front refracting surface Lf and rear refracting surface Lb of the left lens. An edge thickness $\Delta i$ is then found for the radius vector parameters ($\rho_i$, $\theta_i$) in the same way as in the edge thickness computation for the right lens (step 11), a radius vector ($\rho_a$, $\rho_a$) having a maximum edge thickness $\Delta_{max}$ (= fZs - bZa) and a radius vector ($\rho_b$, $\rho_b$) having a minimum edge thickness $\Delta_{min}$ (= fZb - bZb) are selected, and the program proceeds to a step 120.

Step 120

In this step, a bevel apex position and curvature of the left lens are computed in the same way as for the "bevel apex position and curvature" of the right lens in step 13, and the program proceeds to a step 120-1.

Step 120-1

In this step, it is determined whether or not the P button 81 (selector) for using data previously measured and computed for the right lens is depressed.

If the "P" button 81 is depressed, the program proceeds to a step 120-3, and if the "P" button is not depressed, the program proceeds to a step 120-2.

Step 120-2

In this step, it is determined whether or not the start button ST for performing bevel curve computations is depressed. If the start button ST is depressed, the bevel curvature Ce and bevel apex distances s, t for the left lens are found in steps 130, 140 in the same way as in the steps 13, 14, and the program proceeds to a step 150.

Step 120-3

In this step, data for the right lens found and stored in [1], is recalled from the memory 1 and transposed into data for the left lens, following which the program proceeds to the step 150.

In this operation, the bevel apex position of the left lens is found based on the shift amount, etc., indicated by the "bevel apex distances s, t " and "position ± 0.---" found in the immediately preceding computation.

The bevel apex distances s, t in this case are distances from the front refracting surface Lf when the maximum edge thickness and minimum edge thickness of the lens are divided in the ratio m:n. Further, the shift amount indicates how far the actual bevel apex grinding position should be displaced when the bevel apex position found by computation from the dividing ratio of the lens edge thickness m:n, i.e. the bevel position when the bevel apex is placed at distances s, t from the front refracting surface of the lens, is [0].

If the shift amount of the bevel apex position in front of or behind the lens is $\Delta a$ (it is minus in front and plus behind), if the distance of the bevel apex position from the front refracting surface for the maximum edge thickness of the left lens is sL, and if the distance of the bevel apex position from the front refracting surface for the minimum edge thickness of the left lens is tL, the actual bevel apex distances sL, tL used for grinding the left lens may be calculated from:

$$sL = s + \Delta a = eZa\text{-}kZa + \Delta a \qquad (13)$$

$$tL = t + \Delta a = eZb\text{-}kZb + \Delta a \qquad (14)$$

These bevel apex positions eZa, eZb of the left lens at bevel apex distances sL, tL, may be found from:

$$eZa = sL + kZa\text{-}\Delta a \qquad (15)$$

$$eZb = tL + kZb\text{-}\Delta a \qquad (16)$$

Step 150

In this step 150, lens data including the bevel curve found in the aforesaid step 140, and lens data found from previous data in the step 120-3, are displayed by the display device 7.

As in the case of the step 15, this data includes the bevel curvature Ce, the bevel apex distances s, t and the bevel section shapes 71, 72, 76 of the left lens.

Step 160

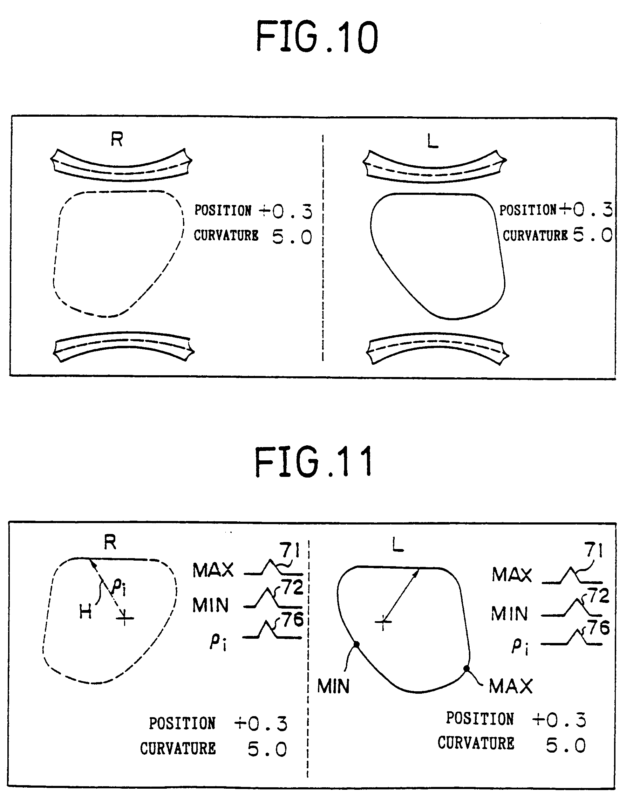

In this step, the display or data displayed on the screen of the display device 7 is modified by pressing the display mode selector button 67 as in Figs. 10, 11, the [$\rho_i$] button 82 for shifting the indicator line H showing the radius vector $\rho_i$, the [t] button 62 for modifying the bevel apex distance, the [I] button 64 and the [D] button 65. This operation is the same as that in the previous step 16.

Step 160-1

In this step the display values s,t, the position of the indicator line H and the bevel configuration 76 for the left lens which were modified in the step 160, are displayed by the display device 7 at the same time as for the right lens data.

Futher, as shown in Fig.10, the display mode selector button 67 is pressed in the step 160, the data for the right lens found previously (part of the graphic data is now shown by a broken line) is displayed in the left half of the screen of the display device 7 as shown in Fig. 10.

At the same time, the other hand, the lens edge shape, lens curved shape and curvature (curvature = 5.0 in the figure), and the shift amount from the bevel apex position set by m:n (position = +0.3 in the figure) for the left lens are displayed in the right half of the screen of the display device 7.

Alternatively, as shown in Fig.11, when the display mode selector button 67 is pressed again in the step 160, the data for the right lens found previously (part of the graphic data is now shown by a broken line) such as the lens edge shape, lens bevel section shape and curvature may be displayed in the left half of the screen of the display device 7 as shown in Fig. 11.

In these case, the lens edge shape, lens bevel section shape and curvature (curvature = 5.0 in the figure), and the shift amount from the bevel apex position set by m:n (position = +0.3 in the figure) for the left lens are displayed in the right half of the screen of the display device 7.

Further, as in the immediately preceding case, the "position" display of the shift amount for only the left lens is modified by depressing the button [I] and [D] in the step 160.

The program then proceed to a step 160-2.

Step 160-2 ~ 250

During steps 160-2 ~ 250, modified data is stored in the memory 2 in a step 200 or a step 250. Other processing is the same as in the steps 16-2 ~ 25, and a description of it will therefore be omitted here.

When these steps are complete, bevel grinding of the left lens is carried out based on the lens data stored by memory 2.

In the embodiment described hereintofore, data for the left and right lens were displayed simultaneously on the display unit of the display device 7. The invention is however not limited to this arrangement, and data for the left and right lens can be displayed separately.

As described hereintofore, according to the present invention, lens data already found for one lens by measurement and computation is used to find data for the other lens by computation. After setting the bevel position for one lens and grinding it according to this information, therefore, it is unnecessary to reset the bevel position before grinding the other lens.

Further, if the apparatus is such that the bevel information (or bevel condition) for one lens to be ground can be observed while observing on the same display means the bevel information (or bevel condition) for a lens which has already been ground, the bevel information (or bevel condition) for a new lens to be ground can be set by comparing the bevel information (or bevel condition) for the left and right lenses.

Further, if the apparatus is such that it is possible either to "find data for one lens by computation using data already found for the other lens by measurement and computation", or to "reset the bevel position from a new lens configuration and edge thickness", if further the left and right lens frame, and left and right lens shapes are substantially identical, and if still further there is not a great difference between the wearer's vision in the left and right eyes so that the left and right lens edge thicknesses are also substantially identical, then after setting the bevel position for one lens and grinding the lens according to these information (or condition), it is unnecessary to reset the bevel position before grinding the other lens.

If on the contrary, the left and right lens frame shapes are different and left and right lens (if the wearer's vision in the left and right eyes is markedly different), the bevel position can be reset independently of the first lens according to the new lens configuration and edge thickness.

**Claims**

1. A lens edging machine for grinding a lens based on configurational data obtained by measuring the shape of a pre-edged lens characterized in that it comprises:

    a bevel setting means for setting the positions of the bevel edges of said lens before grinding,

    a display means (7) for displaying bevel shape information in the form of an image before grinding the lens based on configurational data for the lens,

    a memory means for storing a bevel position set for either the left or right lens as a first bevel position,

    and a control means (5) which sets a bevel position for another lens based on the first bevel position stored by said memory means, causes it to be stored as a second bevel position by said memory means, and causes first and second information obtained from the first and second bevel positions to be displayed by said display means (7) so as to select either the first or second bevel information.

2. A lens edging machine as defined in claim 1 arranged such that said first bevel information stored in said memory means and said second bevel information for another lens before grinding can be displayed alongside eachh other said display means (7).

3. A lens edging machine as defined in claim 1 or claim 2 wherein said bevel parameters consist of a lens configuration and lens bevel section parameters.

4. A lens edging machine as defined in claim 3 wherein said bevel section information comprise a lens bevel section shape based on a maximum bevel distance, a lens bevel section shape based on a minimum bevel distance, and corresponding bevel positions.

5. A lens edging machine as defined in claim 3 wherein the bevel position information comprise scales and indices provided in accordance with the lens bevel section shapes.

6. A lens edging machine as defined in claim 3 wherein said lens configuration is a lens edge shape on the inner side of which an indicator line is displayed which can modify a radius vector, and wherein said bevel section shape is a radius vector position corresponding to said indicator line.

7. A lens edging machine as defined in claim 4 wherein the type of lines displaying a first said lens configuration and said lens bevel section shape, and a second said lens configuration and said lens bevel section shape, are arranged to be different.

8. A lens edging machine as defined in claim 1 characterized in that it comprises:
    an arrangement such that the bevel configuration for one lens can be determined based on a first bevel position for the other lens stored by said memory means, an arrangement such that the bevel configuration for one lens can be determined independently by recalculating a bevel position for that lens from configurational data for same, same a selection means for selecting either one of these two bevel position settings.

9. A lens edging machine as defined in claim 1 wherein said control means (5) permits the mode of displaying the second set bevel information displayed by said display means (7) to be modified alone.

**Patentansprüche**

1. Linsenkantenmaschine zum Schleifen von Linsen auf der Grundlage von Konfigurationsdaten, die durch Messen der Form einer vorgekanteten Linse erhalten wurde, dadurch gekennzeichnet, daß sie umfaßt eine Schrägkanteneinstellvorrichtung zum Einstellen der Positionen der Schrägkanten der Linse vor dem Schleifen, eine Anzeigevorrichtung (7) zum Anzeigen der Information der Schrägkante in der Form eines Bildes vor dem Schleifen der Linse auf der Grundlage der Konfigurationsdaten für die Linse, eine Speichervorrichtung zum Speichern eines Schrägkantenpositionssatzes entweder für die linke oder rechte Linse als eine erste Position der Schrägkante und eine Steuervorrichtung (5), die eine Position der Schrägkante für eine andere Linse auf der Grundlage der ersten in der Speichervorrichtung gespeicherten Position der Schrägkante festsetzt, ihre Speicherung durch die Speichervorrichtung als zweite Position der Schrägkante bewirkt und eine Anzeige der von der ersten und zweiten Schrägkantenposition erhaltenen ersten und zweiten Information durch die Anzeigevorrichtung (7) bewirkt, um so entweder die erste oder zweite Schrägkanteninformation auszuwählen.

2. Linsenkantenmaschine nach Anspruch 1, die derart angeordnet ist, daß die erste in der Speichervorrichtung gespeicherte Schrägkanteninformation und die zweite Schrägkanteninformation für eine andere Linse vor dem Schleifen Seite an Seite auf der Anzeigevorrichtung (7) angezeigt werden kann.

3. Linsenkantenmaschine nach Anspruch 1 oder Anspruch 2, bei der die Schrägkantenfasenparameter aus Linsenkonfigurations- und Linsenschrägkantenquerschnittparametern besteht.

4. Linsenkantenmaschine nach Anspruch 3, bei der die Schrägkantenquerschnittsinformation eine Querschnittsform der Linsenschrägkanten auf der Grundlage eines maximalen Schrägkantenabstands, eine Querschnittsform der Linsenschrägkante auf der Grundlage eines minimalen Schrägkantenabstandes und entsprechende Schrägkantenpositionen umfaßt.

**5.** Linsenkantenmaschine nach Anspruch 3, bei der die Schrägkantenpositionsinformation Skalen und Indices umfaßt, die in Übereinstimmung mit den Querschnittsformen der Linsenschrägkanten vorgesehen sind.

**6.** Linsenkantenmaschine nach Anspruch 3, bei der die Linsenkonfiguration eine Linsenkantenform ist, auf deren inneren Seite eine Anzeigelinie aufgezeigt wird, die einen Radiusvektor modifizieren kann und bei der die Schrägkantenquerschnittsform eine Radiusvektorposition entsprechend der Anzeigelinie ist.

**7.** Linsenkantenmaschine nach Anspruch 4, bei der die Art der eine erste der Linsenkonfigurationen und der Querschnittsform der Linsenschrägkanten und eine zweite der Linsenkonfigurationen und der Querschnittsform der Linsenschrägkanten angezeigten Linien unterschiedlich sind.

**8.** Linsenkantenmaschine nach Anspruch 1, dadurch gekennzeichnet, daß sie umfaßt: eine Anordnung derart, daß die Schrägkantenkonfiguration für eine Linse auf der Grundlage einer ersten in der Speichervorrichtung gespeicherten Schrägkantenposition für die andere Linse bestimmbar ist, eine Anordnung derart, daß die Schrägkantenkonfiguration für eine Linse unabhängig durch Wiederbrechen einer Schrägkantenposition für diese Linse von der Konfigurationsdaten für dieselbe bestimmbar ist und eine Auswahlvorrichtung zum Auswählen einer der zwei Schrägkantenpositionseinstellungen.

**9.** Linsenkantenmaschine nach Anspruch 1, bei der die Steuervorrichtung (5) erlaubt, daß die Art der Anzeige der zweiten eingestellten Schrägkanteninformation durch die Anzeigevorrichtung allein verändert werden kann.

**Revendications**

**1.** Machine à équarrir pour meuler une lentille d'après des données de configuration obtenues en mesurant la forme d'une lentille prédécoupée caractérisée en ce qu'elle comprend :

un moyen de définition du biseau pour déterminer les positions des bords du biseau de ladite lentille avant meulage,

un moyen de visualisation (7) pour visualiser les informations relatives à la forme du biseau sous la forme d'une image avant de meuler la lentille d'après les données de configuration pour la lentille,

un moyen de mémoire pour stocker une position de biseau établie pour la lentille gauche ou droite en tant que première position de biseau,

et un moyen de commande (5) qui établit une position de biseau pour une autre lentille d'après la première position de biseau mémorisée par ledit moyen de mémoire, fait en sorte qu'elle soit mémorisée en tant que seconde position de biseau par ledit moyen de mémoire, et fait en sorte que les première et seconde informations obtenues à partir des première et seconde positions de biseau soient visualisées par ledit moyen de visualisation (7) de manière à sélectionner soit la première soit la seconde information de biseau.

**2.** Machine à équarrir des lentilles telle que définie dans la revendication 1 disposée de telle sorte que ladite première information de biseau mémorisée dans ledit moyen de mémoire et ladite seconde information de biseau pour une autre lentille avant le meulage peuvent être visualisées l'une à côté de l'autre par ledit moyen de visualisation (7).

**3.** Machine à équarrir des lentilles telle que définie dans la revendication 1 ou revendication 2 où lesdits paramètres de biseau comportent une configuration de lentille et des paramètres de la section du biseau de lentille.

**4.** Machine à équarrir des lentilles telle que définie dans la revendication 3 où lesdites informations de section de biseau comprennent une forme de section de biseau de lentille d'après une distance de biseau maximum, une forme de section de biseau de lentille d'après une distance de biseau minimum et des positions de biseau correspondantes.

**5.** Machine à équarrir des lentilles telle que définie dans la revendication 3 où les informations de position de biseau comprennent des échelles et des index fournis selon les formes de la section du biseau des lentilles.

6. Machine à équarrir des lentilles telle que définie dans la revendication 3 où la configuration des lentilles est une forme du bord de lentille du côté intérieur dont une ligne de signalisation est visualisée qui peut modifier un rayon vecteur, et où ladite forme de la section du biseau est une position de rayon vecteur correspondant à ladite ligne de signalisation.

7. Machine à équarrir des lentilles telle que définie dans la revendication 4 où les types de lignes visualisant une première configuration de ladite lentille et ladite forme de section du biseau de lentille, et une seconde configuration de ladite lentille et ladite forme de section de biseau de lentille, sont disposés pour être différents.

8. Machine à équarrir des lentilles telle que définie dans la revendication 1 caractérisée en ce qu'elle comprend :
   une disposition telle que la configuration du biseau pour une lentille peut être déterminée d'après une première position de biseau pour l'autre lentille mémorisée par ledit moyen de mémoire, une disposition telle que la configuration du biseau pour une lentille peut être déterminée indépendamment en calculant à nouveau une position de biseau pour cette lentille à partir des données de configuration d'une même lentille, il en est de même pour le moyen de sélection pour sélectionner soit une ou les deux déterminations de la position du biseau.

9. Machine à équarrir des lentilles telle que définie dans la revendication 1 où ledit moyen de commande (5) permet de modifier uniquement le mode de visualisation de la seconde information du biseau déterminé visualisée par ledit moyen de visualisation (7).

# FIG.1

FRAME CONFIGURATION
MEASURING DEVICE

MEMORY 2

$\rho_i, \theta_i$

$\rho_i$

32

35

31

36

33 34

$\rho_i$

37

$\theta_i$

$_fZ_i$ $_bZ_i$

MEMORY m1

MEMORY m2

Lf Lb

L

$\theta_i$

OPERATION CONTROL UNIT

TO
GRINDING APPARATUS

5

INPUTTING
APPARATUS

6

$\theta e$

DISPLAY DEVICE 7

15

# FIG.2(A)

START

MEASURE FRAME CONFIGURATION — 10

MEASURE RIGHT LENS EDGE THICKNESS $\Delta i$ — 11

FIND $\Delta max$, $\Delta min$ — 12

FIND BEVEL CURVE OF RIGHT LENS — 13

FIND BEVEL APEX DISTANCE s, t — 14

B

DISPLAY — 15

C — D

MODIFY s, t CHANGE DISPLAY MODE — 16

A

A

DISPLAY — 16-1

IS SET BUTTON ON? — 16-2    NO — C

YES

FIND BEVEL CURVE — 17

DISPLAY — 18

IS MEMORY BUTTON ON? — 19    NO — B

YES

STORE LENS DATA — 20

END

TO EDGING AND BEVELLING

16

EP 0 479 683 B1

# FIG.2 (B)

D

MODIFY CURVATURE — 21

DISPLAY — 21-1

IS SET BUTTON ON? — 21-2 → D

FIND s', t' — 22

DISPLAY — 23

IS MEMORY BUTTON ON? — 24 → NO → D

YES

STORE LENS DATA — 25

END

TO EDGING AND BEVELLING

17

# FIG. 2 (C-1)

START

MODIFY RIGHT LENS BEVELLING DATA FOR LEFT LENS — 100

MEASURE LEFT LENS EDGE THICKNESS $\Delta i$ — 110

FIND $\Delta max$, $\Delta min$ — 120

IS RIGHT LENS DATA TO BE USED? — 120-1

YES

NO

IS START BUTTON ON? — 120-2

NO

YES

CONVERT LENS DATA — 120-3

FIND BEVEL CURVE FOR LEFT LENS — 130

FIND BEVEL APX DISTANCE s, t — 140

B1

DISPLAY — 150

C1 — — — D1

MODIFY s, t CHANGE DISPLAY MODE — 160

A1

EP 0 479 683 B1

# FIG. 2(C-2)

TO EDGING AND BEVELLING

EP 0 479 683 B1

# FIG.2 (D)

TO EDGING AND BEVELLING

20

EP 0 479 683 B1

# FIG.3

# FIG.4

21

# FIG.5

MAX(S)

MIN(T)

$\rho_i$

# FIG.6

# FIG.7

# FIG.8

R

POSITION +0.3
CURVATURE 5.0

# FIG.9

R                    71

MAX

MIN              72

$\rho_i$              76

MAX                MIN

POSITION +0.3
CURVATURE 5.0

24

# FIG.10

# FIG.11

25